# EUROPÄISCHE PATENTANMELDUNG

(11) **EP 0 536 800 A2**
(43) Veröffentlichungstag der Anmeldung: **14.04.1993**
(21) Anmeldenummer: 92117359.7
(22) Anmeldetag: 10.10.1992
(51) Int. Cl.: B23B 39/16, B23Q 11/00

(54) **Mehrspindel-Bohrmaschine**

(30) Priorität: 11.10.1991 DE 4133786
(71) Anmelder: REICH Spezialmaschinen GmbH, 72622 Nürtingen (DE)
(72) Erfinder: Keusch, Siegfried, W-7319 Plochingen (DE)

(57) **Zusammenfassung**

Die Erfindung betrifft eine Mehrspindel-Bohrmaschine mit Maschinentisch (50) und Absaugvorrichtung, bei der die Spindeln (12,13) auf einem Träger (11) gehalten sind, der mittels einer vertikalen Antriebsachse (10) in Drehbewegungen versetzbar ist, und bei der an einen Absaugkanal (20) ein Absauggebläse anschaltbar ist, der im Bereich des in Arbeitsposition eingestellten und von der Spindel aufgenommenen Werkzeuges (14,15) endet. Mit einer Zentralabsaugung und individuellen, austauschbaren Werkzeugabdeckungen (30,31,32), die mit einem Abdeckverteiler (23) mit Anschlußkanälen (26,27) zum zentralen Absaugrohr (20) verbindbar sind, wird eine optimale, an unterschiedliche Werkzeugbestückung der Spindeln anpaßbare Absaugung geschaffen.

## Beschreibung

Die Erfindung betrifft eine Mehrspindel-Bohrmaschine mit Maschinentisch und Absaugvorrichtung, bei der die Spindeln auf einem Träger gehalten sind, der mittels einer vertikalen Antriebsachse in Drehbewegungen versetzbar ist, und bei der an einen Absaugkanal ein Absauggebläse anschaltbar ist, der im Bereich des in Arbeitsposition eingestellten und von der Spindel aufgenommenen Werkzeuges endet.

Bei den bekannten Mehrspindel-Bohrmaschinen ist der Absaugkanal ein elastisches Absaugrohr, das bis zu dem in Arbeitsposition befindlichen Werkzeug herangeführt und mit seiner Ansaugöffnung seitlich des Werkzeuges angeordnet ist. Die Absaugwirkung ist dabei nicht optimal, da zum einen der Saugstrom das Arbeiten beeinträchtigt, wenn die Saugleistung ausreichend groß gewählt wird und da zum anderen bei reduzierter Saugleistung die Absaugung nur unvollkommen ist, insbesondere dann wenn die Spindeln verschiedene Werkzeuge, wie Einzel-Bohrer, Reihen-Bohraggregate, Nutsägen, Beschlagbohraggregate oder dgl., aufnehmen.

Es ist Aufgabe der Erfindung, eine Mehrfach-Bohrmaschine der eingangs erwähnten Art zu schaffen, bei der eine optimale Absaugung erreicht ist und die Absaugung auf einfache Weise an die in den Spindeln befindlichen, unterschiedlichen Werkzeuge angepaßt werden kann.

Diese Aufgabe wird nach der Erfindung dadurch gelöst, daß die Antriebsachse hohl ausgebildet ist und ein Absaugrohr unverdrehbar aufnimmt, das über dem auf dem Maschinentisch abgelegten Werkstück geschlossen ist und zur Arbeitsposition hin eine Ansaugöffnung aufweist, daß auf dem Absaugrohr ein Abdeckverteiler drehbar gelagert und mit dem Träger synchron verstellbar ist, daß der Abdeckverteiler auf die Spindeln gerichtete Anschlußkanäle aufweist, die wahlweise mit der Ansaugöffnung des Absaugrohres verbindbar sind, und daß mit den Anschlußkanälen werkzeugindividuelle, auf die Größe des Werkzeuges in der Spindel abgestimmte Werkzeugabdeckungen verbindbar sind.

Das feststehende Absaugrohr ist mit seiner Ansaugöffnung auf die in der Arbeitsposition befindliche Spindel ausgerichtet. Mit dem Träger der Spindeln wird der Abdeckverteiler synchron verstellt, so daß dessen Anschlußkanäle stets auf die zugeordneten Spindeln ausgerichtet bleiben. Die werkzeugindividuellen Werkzeugabdeckungen sind austauschbar, d.h. nach Bestückung der Spindeln wählbar und mit den Anschlußkanälen des Abdeckverteilers verbindbar. Die Werkzeugabdeckung kann dabei durch Steck-, Rast- oder Schraubverbindung mit dem Anschlußkanal des Abdeckverteilers verbunden werden. Die Werkzeugabdeckung selbst kann ein- oder mehrteilig sein. Dies richtet sich nach der Größe und Art des abzudeckenden Werkzeuges.

Nach einer Ausgestaltung ist vorgesehen, daß die Anschlußkanäle des Abdeckverteilers nach unten offen sind und eine Winkelteilung aufweisen, die durch die Anzahl der Spindeln gegeben ist.

Diese Ausgestaltung erleichtert die Herstellung des Abdeckverteilers, da sie die Tatsache ausnützt, daß im Betrieb das Werkstück die zugekehrte Seite des Abdeckverteilers verschließt. Dementsprechend ist die Ausgestaltung der Werkzeugabdeckungen so gewählt, daß sie zum Maschinentisch hin offen und mit Durchbrüchen für das zugeordnete Werkzeug versehen sind.

Ist nach einer Ausgestaltung vorgesehen, daß die dem Maschinentisch zugekehrte Seite des Absaugrohres mit einer Platte verschlossen ist, die auf der dem Maschinentisch zugekehrten Seite mit einer elastischen Platte, z.B. einer Filzplatte belegt ist, dann kann das Absaugrohr als Niederhalter für das Werkstück verwendet werden, ohne eine Beschädigung der Werkstückoberfläche befürchten zu müssen.

Die Drehlagerung des Abdeckverteilers ist nach einer Ausgestaltung so gelöst, daß der Abdeckverteiler mit einem hülsenförmigen Ansatz auf dem Absaugrohr drehbar gelagert ist, und daß dieser Ansatz zwischen Fixierringen axial unverschiebbar, jedoch drehbar auf dem Absaugrohr gehalten ist.

Die synchrone Verdrehung des Abdeckteilers mit dem Träger der Spindeln wird auf einfache Art dadurch erreicht, daß am Träger eine Mitnehmeraufnahme befestigt ist, die einen mit dem Abdeckverteiler verbundenen Mitnehmer axial begrenzt verstellbar aufnimmt.

Zur Vertikalverstellung des Absaugrohres ist vorgesehen, daß das Absaugrohr mittels einer Vertikalverstellvorrichtung in der Antriebsachse verstellbar ist. Für den Betrieb der Mehrspindel-Bohrmaschine ist nach einer Weiterbildung vorgesehen, daß die Spindeln mittels Vertikalverstellvorrichtungen verstellbar sind, daß zu Beginn eines Arbeitsvorganges die Vertikalverstellvorrichtung des Absaugrohres vor der Vertikelverstellvorrichtung der Arbeitsspindel betätigbar ist, und daß am Ende des Arbeitsvorganges die Vertikalverstellvorrichtung der Arbeitsspindel vor der Vertikalverstellvorrichtung des Absaugrohres zurückstellbar ist, um eine eindeutige Absaugung während des gesamten Arbeitsvorganges zu erreichen, wobei zudem vorgesehen werden kann, daß das Absauggebläse mit der Verstellung des Absaugrohres ein- und ausschaltbar ist.

Die Erfindung wird anhand eines in den Zeichnungen dargestellten Ausführungsbeispiels näher erläutert. Es zeigt:
- Fig. 1: einen Teilschnitt einer Mehrspindel-Bohrmaschine, der nur die Teile umfaßt, die mit der Absaugung zusammenhängen, und
- Fig. 2: in vergrößertem Teilschnitt den Bereich mit dem Abdeckverteiler und den Werkzeugabdeckungen.

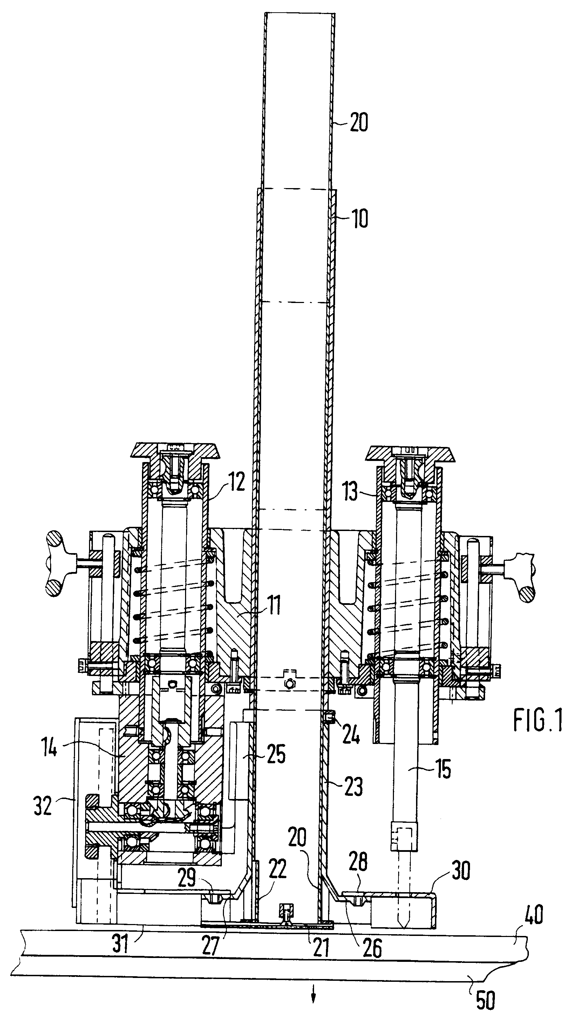

In Fig. 1 ist von den Antriebseinrichtungen der Mehrspindel-Bohrmaschine nur die vertikale Antriebsachse 10 gezeigt, auf der ein Träger 11 für die Spindeln 12 und 13 drehfest angeordnet ist. Die Antriebseinrichtungen für die Ableitung der Drehbewegungen der Spindelaufnahmen und die Vertikalverstellvorrichtung für die Arbeitsspindel sind nicht dargestellt, da sie für die vorliegende Erfindung nicht von Bedeutung sind und in beliebiger, an sich bekannter Weise ausgebildet sein können.

Die Antriebsachse 10 ist im Ausführungsbeispiel als Hohlwelle ausgebildet und nimmt ein im Außendurchmesser an den Innendurchmesser dieser Hohlwelle angepaßtes Absaugrohr 20 auf. Dieses Ansaugrohr 20 wird in bekannter Weise mit dem Absauggebläse verbunden. Die Spindeln 12 und 13 können unterschiedliche Werkzeuge wie eine Nutsäge 14 oder einen Einzel-Bohrer 15 aufnehmen. Das zu bearbeitende Werkstück 40 wird auf dem Maschinentisch 50 abgelegt.

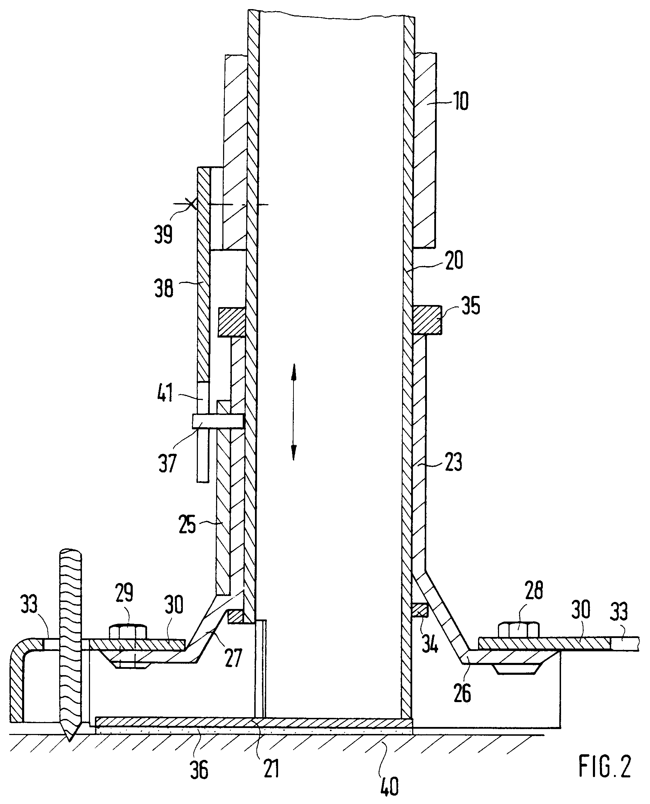

Wie die Fig. 2 zeigt, ist die untere Seite des Absaugrohres 20 mit einer Platte 21 verschlossen und weist eine seitliche Ansaugöffnung 22 auf, die auf die Arbeitsposition der Mehrspindel-Bohrmaschine ausgerichtet ist. Das Absaugrohr 20 ist durch den Anschluß des Absauggebläses oder durch entsprechende Haltemittel am oberen Ende unverdrehbar in der Antriebsachse 10 gehalten, so daß die Ansaugöffnung 22 stets die eingestellte Position einhält.

Auf dem unteren Teil des Absaugrohres 20, der aus dem Träger 11 ragt, ist ein Abdeckverteiler 23 drehbar gelagert. Dazu weist der Abdeckverteiler 23 einen hülsenförmigen Ansatz auf, der auf dem Absaugrohr 20 zwischen den beiden Fixierringen 34 und 35 axial unverschiebbar, jedoch frei drehbar gehalten ist.

Der Abdeckverteiler 23 geht an seinem, dem Maschinentisch 50 zugekehrten Ende in strahlenförmig nach außen gerichtete Anschlußkanäle 26 und 27 über. Die Anzahl und Winkelteilung richtet sich nach der Anzahl und Winkelstellung der Spindeln 12 und 13 im Träger 11. Diese Anschlußkanäle 26 und 27 können zum Maschinentisch 50 hin offen sein, da das Werkstück 40 im Betrieb diese Seite des Abdeckverteilers 23 verschließt. An diese Anschlußkanäle 26 und 27 können Werkzeugabdeckungen 30 und 31 angebracht werden, die zum Teil auf die Anschlußkanäle 26 und 27 aufgeschoben und mit diesen verschraubt sind, wie die Schraubverbindungen 28 und 29 zeigen. Ist das Werkzeug ein Einzel-Bohrer 15, dann weist die Werkzeugabdeckung 30 lediglich einen Durchbruch 33 auf. Ist, wie Fig. 1 zeigt, das Werkzeug z .B. eine Nutsäge 14, dann hat die Werkzeugabdeckung vorzugsweise zwei Teile 31 und 32, wobei das Teil 31 den Anschluß zum Anschlußkanal 27 herstellt und das Teil 32 das Sägeblatt abdeckt.

Die Platte 21 kann auf der dem Maschinentisch 50 zugekehrten Seite mit einer Filzplatte 36 belegt sein. Ist dem Absaugrohr 20 eine Vertikalverstellvorrichtung zugeordnet, dann kann das Absaugrohr 20 in der Antriebsachse 10 vertikal verstellt und als Niederhalter für das Werkstück 40 verwendet werden. Wie Fig. 2 zeigt, ist an dem Träger 11 eine Mitnehmeraufnahme 38 festgeschraubt, wie die Schraubverbindung 39 zeigt. Diese plattenförmige Mitnehmeraufnahme 38 hat einen Vertikalschlitz 41, in den ein Mitnehmer 37 ragt, der mit der Führungsplatte 25 an dem Abdeckverteiler 23 befestigt ist. Auf diese Weise ist sichergestellt, daß der Abdeckverteiler 23 synchron mit dem Träger 11 und damit den Spindeln 12 und 13 verdreht wird. Die Werkzeugabdeckungen 30, 31 und 32 bleiben daher stets den Spindeln 12 und 13 zugeordnet. Das Absaugrohr 20 mit dem Abdeckverteiler 23 und den Werkzeugabdeckungen 30, 31 und 32 bleibt als Einheit vertikal verstellbar und dies unabhängig von den Spindeln 12 und 13. Dies ermöglicht einen Betrieb der Mehrspindel-Bohrmaschine, bei dem zu Beginn eines Arbeitsvorganges das Absaugrohr 20 vor der Arbeitsspindel in Richtung zum Maschinentisch 50 verstellt wird, während am Ende des Arbeitsvorganges die Arbeitsspindel vor dem Absaugrohr 20 zurückgestellt wird. Dabei kann zudem mit der Verstellung des Absaugrohres 20 das Absauggebläse ein- und ausgeschaltet werden.

## Patentansprüche

1. Mehrspindel-Bohrmaschine mit Maschinentisch und Absaugvorrichtung, bei der die Spindeln auf einem Träger gehalten sind, der mittels einer vertikalen Antriebsachse in Drehbewegungen versetzbar ist, und bei der an einen Absaugkanal ein Absauggebläse anschaltbar ist, der im Bereich des in Arbeitsposition eingestellten und von der Spindel aufgenommenen Werkzeuges endet,
dadurch gekennzeichnet,
daß die Antriebsachse (10) hohl ausgebildet ist und ein Absaugrohr (20) unverdrehbar aufnimmt, das über dem auf dem Maschinentisch (50) abgelegten Werkstück (40) geschlossen ist und zur Arbeitsposition hin eine Ansaugöffnung (22) aufweist,
daß auf dem Absaugrohr (20) ein Abdeckverteiler (23) drehbar gelagert und mit dem Träger (11) synchron verstellbar ist, daß der Abdeckverteiler (23) auf die Spindeln (12,13) gerichtete Anschlußkanäle (26,27) aufweist, die wahlweise mit der Ansaugöffnung (22) des Absaugrohres (20) verbindbar sind, und
daß mit den Anschlußkanälen (26,27) werkzeugindividuelle, auf die Größe des Werkzeuges in der Spindel (12,13) abgestimmte Werkzeugabdeckungen (30,31,32) verbindbar sind.

2. Mehrspindel-Bohrmaschine nach Anspruch 1,
dadurch gekennzeichnet,
daß die Anschlußkanäle (26,27) des Abdeckverteilers (23) nach unten offen sind und eine Winkelteilung aufweisen, die durch die Anzahl der Spindeln (12,13) gegeben ist.

3. Mehrspindel-Bohrmaschine nach Anspruch 1 oder 2,
dadurch gekennzeichnet,
daß die Werkzeugabdeckungen (30,31) zum Maschinentisch (50) hin offen und mit Durchbrüchen für das zugeordnete Werkzeug (15) versehen sind.

4. Mehrspindel-Bohrmaschine nach einem der Ansprüche 1 bis 3, dadurch gekennzeichnet,
daß die dem Maschinentisch (50) zugekehrte Seite des Absaugrohres (20) mit einer Platte (21) verschlossen ist, die auf der dem Maschinentisch (50) zugekehrten Seite mit einer elastischen Platte, z.B. einer Filzplatte (36) belegt ist.

5. Mehrspindel-Bohrmaschine nach einem der Ansprüche 1 bis 4, dadurch gekennzeichnet,
daß der Abdeckverteiler (23) mit einem hülsenförmigen Ansatz auf dem Absaugrohr (20) drehbar gelagert ist, und daß dieser Ansatz zwischen Fixierringen (34,35) axial unverschiebbar, jedoch drehbar auf dem Absaugrohr (20) gehalten ist.

6. Mehrspindel-Bohrmaschine nach einem der Ansprüche 1 bis 5, dadurch gekennzeichnet,
daß am Träger (11) eine Mitnehmeraufnahme (38) befestigt ist, die einen mit dem Abdeckverteiler (23) verbundenen Mitnehmer (37) axial begrenzt verstellbar aufnimmt.

7. Mehrspindel-Bohrmaschine nach einem der Ansprüche 1 bis 6, dadurch gekennzeichnet,
daß das Absaugrohr (20) mittels einer Vertikalverstellvorrichtung in der Antriebsachse (10) verstellbar ist.

8. Mehrspindel-Bohrmaschine nach Anspruch 7,
dadurch gekennzeichnet,
daß die Spindeln mittels Vertikalverstellvorrichtungen verstellbar sind,
daß zu Beginn eines Arbeitsvorganges die Vertikalverstellvorrichtung des Absaugrohres (20) vor der Vertikelverstellvorrichtung der Arbeitsspindel (z.B. 12) betätigbar ist, und
daß am Ende des Arbeitsvorganges die Vertikalverstellvorrichtung der Arbeitsspindel (z.B. 12) vor der Vertikalverstellvorrichtung des Absaugrohres (20) zurückstellbar ist.

9. Mehrspindel-Bohrmaschine nach Anspruch 8,
dadurch gekennzeichnet,
daß das Absauggebläse mit der Verstellung des Absaugrohres (20) ein- und ausschaltbar ist.
